# EUROPEAN PATENT APPLICATION

(11) **EP 1 961 714 A1**
(43) Date of publication of application: **27.08.2008**
(21) Application number: 08075040.9
(22) Date of filing: 16.01.2008
(51) Int. Cl.: C04B 26/06, C09D 5/34, E01C 5/00, C04B 14/06, C04B 24/04

(54) **Fixation for a joint**

(30) Priority: 16.01.2007 NL 1033235
(71) Applicant: C-Force B.V., 4815 HR Breda (NL)
(72) Inventor: Van Der Klaauw, Johannes Petrus, 4759 BC Noordhoek (NL)
(74) Representative: Grootscholten, Johannes A.M.

(57) **Abstract**

The present invention relates to a method for constructing a pavement, comprising of: i) arranging paving elements some distance from each other on a surface such that an intermediate space is formed between the paving elements; ii) applying a mixture of a granular filler and a coagulating agent in the intermediate space between the paving elements; iii) arranging a fixing means at least in the intermediate space; and iv) allowing the fixing means to cure; to the obtained pavement; to an assembly comprising a first and a second container; to a composition and to the use thereof.

## Description

The present invention relates to a method for constructing a pavement, to the pavement, to an assembly comprising a first and a second container, to a composition and to the use thereof.

When a pavement is arranged, paving elements such as loose paving stones are usually used, for instance (clinker) bricks. When these paving stones are placed on for instance a surface of sand, they are then often positioned such that an intermediate space is formed between the paving stones. After the paving stones have been placed this intermediate space is usually filled with a granular filler such as sand. A so-called joint is thus obtained between the paving stones. Making use of such a joint prevents the paving stones being pushed against each other when the pavement is loaded, whereby they could break.

The use of sand and other granular fillers does however have a number of drawbacks. A first drawback is that when it rains a part of the sand between the paving stones is often flushed away. The paving stones hereby come to lie against each other, whereby they can break when loaded. In addition, weeds often grow in the sand between the paving stones. This is undesirable from an aesthetic viewpoint.

In order to prevent these problems use is now being made of fixing means. These fixing means are arranged over the joints and over the paving stones, whereby the upper layer of the sand present in the joints is fixed. Fixing means which can be used for this purpose are, among others, so-called acrylic polymers.

A drawback of the use of these fixing means is however that they cure relatively slowly. Another drawback is that it must be dry outside during arranging of the fixing layer. If it is not dry, the fixing means is washed away relatively easily and there is no or insufficient fixation of for instance the sand between the paving stones.

NL-A-1,005,690 thus relates to a method with the object of increasing the hardness of fixing means after curing thereof. It is proposed for this purpose to add, by way of example, polyurethane to an acrylic-based fixing means in order to enhance cross-linking and to increase the resulting shore hardness. This however relates to the treatment of the joints between building elements in for instance outside walls, where the curing time is hardly a significant factor or not a factor at all. This disclosure does relate to the rapid realization of a covering film for the purpose of preventing washing away in the rain. However, the eventual curing time in the examples in this document is one to two weeks, which will in no way suffice in the case of a pavement or road surface as in the present invention. There is a great need for a method enabling treatment of a road surface with a fixing means such that the road surface or the pavement can quickly be reused again. The method known from NL-1,005,690 would entail a road surface or pavement sometimes having to remain closed for up to more than two weeks until the fixing means applied therein has hardened sufficiently to be able to withstand the load on the pavement.

The present invention has for its object to provide a solution for the above stated problems.

A first aspect of the present invention relates to a method for constructing a pavement, comprising of:
i) arranging paving elements some distance from each other on a surface such that an intermediate space is formed between the paving elements;
ii) applying a mixture of a granular filler and a coagulating agent in the intermediate space between the paving elements;
iii) arranging a fixing means at least in the intermediate space; and
iv) allowing the fixing means to cure.

A relatively rapid curing of the fixing means is achieved by making use of a fixing means in combination with a coagulating agent present between the granular filler such as sand. A relatively short curing time is hereby obtained, thereby preventing the fixing means being washed away in the case of rain. Owing to the relatively rapid curing of the fixing means the pavement can also be reused again relatively quickly.

The fixing means used preferably comprises a polymer emulsion, optionally water-based, more preferably an acrylic emulsion. The pH of such emulsions is usually in the range of 7 to 10. If the pH of this emulsion is reduced, the emulsion then becomes unstable and the polymer particles flocculate, after which they coagulate and form a whole. If this process occurs in a granular filler, the granular particles are then connected to each other and they thus become fixed. The coagulating agent used therefore aims to bring about the quickest possible flocculation of the polymer particles in the polymer emulsion, i.e. to make the emulsion unstable as quickly as possible.

The recommended acrylic emulsions are so-called block polymers and/or copolymers. It is further particularly recommended that the acrylic emulsion comprises a styrene-acrylic emulsion. This latter is particularly recommended because a very good fixation of the grains of the granular filler is obtained. Such an emulsion further has very good penetrating properties, whereby a fixation of the grains of the granular filler is also obtained deep into the intermediate space (joint) between the elements such as paving stones.

The coagulating agent is preferably water-soluble and preferably comprises an acid. An acid is recommended because it causes a reduction in the pH of the emulsion, whereby it becomes unstable and flocculates. The acid is preferably present in solid form, for instance in crystal form or as a salt, and is water-soluble. The acid preferably comprises an organic acid such as a carboxyl acid, such as citric acid, sulphamic acid, lactic acid and/or tartaric acid. An advantage of using such acids is that they have no adverse effect on the environment if they enter the surface, i.e. the ground.

The polyurethane known from NL-A-1,005,690 can in no way be deemed a coagulating agent in view of the relatively long curing times of sometimes more than one to two weeks achieved therewith.

Although the use of acids as coagulating agent is recommended, other types of coagulating agent can also be used, such as for instance salts or organic solvents.

Very good results are obtained when the mixture of the granular filler and the coagulating agent comprises 0.1 to 5% by weight coagulating agent, preferably 0.2 to 2% by weight coagulating agent, more preferably about 1% by weight coagulating agent.

It is further recommended that the grains of the granular filler have a particle size of between 0.2 and 1.8 mm, preferably between 0.3 and 0.9 mm. Most recommended is that sand is used as filler.

A second aspect of the present invention relates to an assembly comprising a first container and a second container, wherein the first container comprises a mixture of a granular filler and a coagulating agent, and wherein the second container comprises a fixing means.

A third aspect of the present invention relates to a composition comprising a mixture of a granular filler and a coagulating agent.

A fourth aspect of the present invention relates to the use of the above stated fixing means and a mixture of coagulating agents and granular fillers in the construction of a pavement.

A final aspect of the present invention relates to a pavement obtainable in accordance with the above stated method.

Mentioned and other features of the described method for constructing a pavement will be further elucidated hereinbelow on the basis of an exemplary embodiment, which is given only by way of example without the invention being deemed limited thereto.

### Example

A test pavement about 15 metres long and 5 metres wide of so-called clinker bricks was laid. The pavement was arranged on a surface of (rolled) sand wherein the clinker bricks were placed some distance from each other. The distance between the side surfaces of the different clinker bricks was about 1.5 cm. An intermediate space (joint) was thus defined between the clinker bricks. A filler was swept into this intermediate space, wherein the filler comprised sand (grain size between 0.3 and 0.9 mm) and about 1% by weight (crystalline) citric acid. Once the intermediate spaces were substantially filled with the filler, a (water-based) styrene/acrylic emulsion (pH 9.1) was applied over the pavement. The quantity of emulsion applied was such that the intermediate spaces with the filler therein were almost fully moistened. After eight hours the filler was fixed such that loading of the pavement part was possible.

The present invention is not limited to the above described embodiments, the rights sought being rather defined by the following claims, within the scope of which many possible modifications can be envisaged, such as among others a combination of the above described embodiments.

## Claims

1. Method for constructing a pavement, comprising of:
i) arranging paving elements some distance from each other on a surface such that an intermediate space is formed between the paving elements;
ii) applying a mixture of a granular filler and a coagulating agent in the intermediate space between the paving elements;
iii) arranging a fixing means at least in the intermediate space; and
iv) allowing the fixing means to cure.

2. Method as claimed in claim 1, wherein the fixing means comprises a polymer emulsion.

3. Method as claimed in claim 1 or 2, wherein the polymer emulsion comprises an acrylic emulsion.

4. Method as claimed in claim 3, wherein the acrylic emulsion comprises a block polymer and/or copolymer.

5. Method as claimed in any of the claims 1-4, wherein the fixing means comprises an acrylic emulsion, preferably a styrene-acrylic emulsion.

6. Method as claimed in any of the claims 1-5, wherein the coagulating agent comprises an acid.

7. Method as claimed in claim 6, wherein the acid comprises an organic acid.

8. Method as claimed in claim 7, wherein the organic acid comprises a carboxyl acid, such as preferably citric acid, sulphamic acid, lactic acid and/or tartaric acid.

9. Method as claimed in any of the claims 1-8, wherein the mixture of the granular filler and the coagulating agent comprises 0.1 to 5% by weight coagulating agent, preferably 0.2 to 2% by weight coagulating agent, more preferably about 1% by weight coagulating agent.

10. Method as claimed in any of the claims 1-9, wherein the grains of the granular filler have a particle size of between 0.2 and 1.8 mm, preferably between 0.3 and 0.9 mm.

11. Method as claimed in any of the claims 1-10, wherein the granular filler comprises sand.

12. Assembly comprising a first container and a second container, wherein the first container comprises a mixture of a granular filler and a coagulating agent, and wherein the second container comprises a fixing means.

13. Assembly as claimed in claim 12, wherein the coagulating agent comprises an acid.

14. Assembly as claimed in claim 13, wherein the acid comprises an organic acid.

15. Assembly as claimed in claim 14, wherein the organic acid comprises a carboxyl acid, such as preferably citric acid, sulphamic acid, lactic acid and/or tartaric acid.

16. Assembly as claimed in any of the claims 12-16, wherein the mixture of the granular filler and the coagulating agent comprises 0.1 to 5% by weight coagulating agent, preferably 0.2 to 2% by weight coagulating agent, more preferably about 1% by weight coagulating agent.

17. Assembly as claimed in any of the claims 12-16, wherein the grains of the granular filler have a particle size of between 0.2 and 1.8 mm, preferably between 0.3 and 0.9 mm.

18. Assembly as claimed in any of the claims 12-17, wherein the granular filler comprises sand.

19. Assembly as claimed in any of the claims 12-18, wherein the fixing means of the second container comprises a polymer emulsion.

20. Assembly as claimed in claim 19, wherein the polymer emulsion comprises an acrylic emulsion.

21. Assembly as claimed in claim 20, wherein the acrylic emulsion comprises a block polymer and/or copolymer.

22. Assembly as claimed in any of the claims 12-21, wherein the fixing means comprises an acrylic emulsion, preferably a styrene-acrylic emulsion.

23. Composition comprising a mixture of a granular filler and a coagulating agent.

24. Composition as claimed in claim 23, wherein the coagulating agent comprises an acid.

25. Composition as claimed in claim 24, wherein the acid comprises an organic acid.

26. Composition as claimed in claim 25, wherein the organic acid comprises a carboxyl acid, such as preferably citric acid, sulphamic acid, lactic acid and/or tartaric acid.

27. Composition as claimed in any of the claims 23-26, comprising 0.1 to 5% by weight coagulating agent, preferably 0.2 to 2% by weight coagulating agent, more preferably about 1% by weight coagulating agent.

28. Composition as claimed in any of the claims 23-27, wherein the grains of the granular filler have a particle size of between 0.2 and 1.8 mm, preferably between 0.3 and 0.9 mm.

29. Composition as claimed in any of the claims 23-28, wherein the granular filler comprises sand.

30. Use of a fixing means and a mixture of a coagulating agent and a granular filler in the construction of a pavement.

31. Pavement obtainable as according to any of the claims 1-11.
